# EUROPEAN PATENT SPECIFICATION

(11) **EP 0 738 243 B1**
(45) Date of publication and mention of the grant of the patent: **09.09.1998**
(21) Application number: 94900037.6
(22) Date of filing: 26.11.1993
(51) Int. Cl.: C03C 3/087, C03C 3/095, C03C 3/11

(54) **LEAD-FREE CRYSTAL GLASS WITH THE REFRACTIVE INDEX HIGHER THAN 1,52**
BLEIFREIES KRISTALLGLAS MIT EINEM BRECHUNGSINDEX VON MEHR ALS 1,52
CRISTAL SANS PLOMB A INDICE DE REFRACTION SUPERIEUR A 1,52

(30) Priority: 03.11.1993 CZ 233893
(43) Date of publication of application: 23.10.1996
(73) Proprietor: Vysoká skola chemicko-technologická, 166 28 Praha 6 (CZ)
(72) Inventor: RADA, Miroslav, 345 61 Stankov (CZ); SASEK, Ladislav, 162 00 Praha 6 (CZ); SASEK, Ladislav, 106 00 Praha 10 (CZ)
(74) Representative: Jeck, Anton, Dipl.-Ing.
(86) International application number: CZ9300027
(87) International publication number: WO9513993

(56) References cited:
- EP-A- 0 547 263
- EP-A- 0 553 586
- EP-A- 0 564 802
- WO-A-92/19559

## Description

### Technical field

This invention relates to lead-free crystal glass with the refractive index higher than 1,52 which is intended for the man-made and machine-made utility glassware, especially those of luxurious character, with high lustre and light transmittance. The glass contains silicon dioxide SiO₂, aluminium oxide Al₂O₃, zirconium dioxide ZrO₂, hafnium dioxide HfO₂, titanium dioxide TiO₂, calcium oxide CaO, magnesium oxide MgO, zinc oxide ZnO, potassium oxide K₂O, sodium oxide Na₂O, antimony trioxide Sb₂O₃, iron trioxide Fe₂O₃, sulphates, chlorides and at least one component from the group incorporating erbium oxide Er₂O₃, neodymium oxide Nd₂O₃, ceric oxide CeO₂, cobaltous oxide CoO, nickel oxide NiO, manganese oxides and selenium compounds.

### Background art

For the products from so called cheap crystal glass accentuated by a low price the refractory index fluctuates about a value of 1,51 and, barium oxide BaO and lead oxide PbO are being used by some manufacturers but in smaller amounts only, as was stated by A.Smr 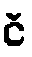 ek in the journal Sklá 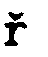 a keramik 38 , (1988), p. 286-294. The group of special crystal glass types represents already more refined products in which the refractive index is under control and has to be maintained close to the value 1,52. This can be achieved by addition of barium oxide BaO, zinc oxide ZnO and, as the case may be, in smaller amounts even of lead oxide PbO, as it was stated e.g. in DE-patent from 1987 No. 2839645, such a glass according to said patent contains in % by weight as follows: silicon dioxide SiO₂ 65 to 75, aluminium oxide Al₂O₃ 0,1 to 2, calcium oxide CaO 2 to 12, magnesium oxide MgO 0 to 8, sodium oxide Na₂O 7 to 15,potassium oxide K₂O 0 to 10, lithium oxide Li₂O 0 to 3, barium oxide BaO 1 to 6, zinc oxide ZnO 0,2 to 3,lead oxide PbO 0 to 10 and titanium dioxide TiO₂ 0,2 to 5.this invention covers by its chemical composition, with the exception of titanium dioxide TiO₂ most of crystal glass of types being produced excepting of lead and high-lead crystal glass produced with the content of lead oxide PbO ≥ 24 % by weight.It is also necessary to refer to the published Japanese patent application from 1986 No. 61270234, though relating to glass types for fluorescent lamps, but with the composition analogous to crystal glasses. The glass types according to this invention contain in % by weight from 65 to 75 of silicon dioxide SiO₂, from 1 to 2,5 of aluminium oxide Al₂O₃, from 0,001 to 0,02 of iron trioxide Fe₂O₃, from 10 to 18 of sodium oxide Na₂O, from 0 to 2 of potassium oxide K₂O, while the sum of sodium and potassium oxides ranges between 10 and 18, from 1 to 10 of calcium oxide CaO, from 0,5 to 6 of magnesium oxide MgO, while the sum of calcium and magnesium oxides ranges between 2 an 15, from 0,1 to 2 of barium oxide BaO, from 1 to 3 of boron oxide B₂O₃ and 0,2 to 2 of antimony trioxide Sb₂O₃, while the sum of barium, boron and antimony oxides ranges between 1,4 and 6 % by weight.

For the products of luxurious character which are decorated predominatingly by cutting the lead and high-lead crystal glass types are used where the refractive index value ≥ 1,545 is required.At the present time the unharmful hygienic properties of glass are being preferred particularly concerning the content of lead and barium in the leaching, as important also the purity of the atmosphere and effluents is regarded. With regard to the fact that in the production of those special crystal glass types the refractive index of the desired value is being elevated largely by an increased amount of lead oxide PbO and barium oxide BaO, the said hygiene properties that are required induce hardly solvable problems in the production of such glass types.

The disadvantages mentioned will be improved according to Czech patent No. 278892 which corresponds to international patent application WO 92/19559, the proposed chemical composition of crystal lead-free glasses conforming with it contains in % by weight from 50 to 65 of silicon dioxide SiO₂, from 0,1 to 10 of aluminium oxide Al₂O₃, from 0,5 to 17 of zirconium dioxide ZrO₂, from 10 to 22 of potassium oxide K₂O and/or sodium oxide Na₂O, from 2 to 10 of calcium oxide CaO and/or magnesium oxide MgO,and from 0,01 to 0,025 of iron trioxide Fe₂O₃, individually or in a combination it contains from 0,1 to 10 % by weight of barium oxide BaO, zinc oxide ZnO, boron oxide B₂O₃ and lithium oxide Li₂O and traces to 1 % by weight of antimony trioxide Sb₂O₃. As further modifiers individually or in a combination titanium dioxide TiO₂ and stannic dioxide SnO₂ are present in the range of traces to 1 % by weight.

The composition of a lead-free zinc-silicon crystal glass is presented also in the European patent No. 547263 published in 1995 . The glass according to this invention contains in % by weight from 65 to 70 of silicon dioxide SiO₂, from 6 to 9 of calcium oxide CaO, from 4 to 12 of potassium oxide K₂O, from 4 to 12 of sodium oxide Na₂O, from 0,5 to 5 of boron oxide B₂O₃, from 4 to 7 of zinc oxide ZnO, from 0,1 to 1 of antimony trioxide Sb₂O₃ and from 1 to 6 of zirconium dioxide ZrO₂ and/or titanium dioxide TiO₂.

Zirconium dioxide ZrO₂ according to the published Japanese patent application from 1988 No. 63147843 can be used as a component also in a chemically resistent glass which composition in % by weight is as follows: from 63 to 67 of silicon dioxide SiO₂, from 4 to 4,8 of boron oxide B₂O₃,from 4 to 5,5 of aluminium oxide Al₂O₃, from 0 to 4 of titanium dioxide TiO₂, from 2,5 to 3,6 of magnesium oxide MgO, from 4,7 to 8,7 of calcium oxide CaO, from 0 to 5 of barium oxide BaO, from 7,5 to 13,9 of sodium oxide Na₂O, from 0 to 2 of potassium oxide K₂O, while the sum of sodium and potassium oxides ranges from 8 to 15,5, from 0 to 1 of iron trioxide Fe₂O₃ and from 0 to 5 of zirconium dioxide ZrO₂.

The next group is composed of inventions, in which besides zirconium dioxide ZrO₂ also strontium oxide SrO is incorporated. This category according to the U.S. patent from 1977 No. 4065317 includes glasses with a high chemical resistance which are suitable for pharmaceutical purposes, scientific and biological branches. The composition of these glass types is as follows (in mol.%): from 75 to 82 of silicon dioxide SiO₂, from 2 to 8 of zirconium dioxide ZrO₂, from 1 to 5 of aluminium oxide Al₂O₃, from 2 to 10 of sodium oxide Na₂O, from 2 to 10 of potassium oxide K₂O, from 2 to 10 of calcium oxide CaO, from 2 to 10 of strontium oxide SrO, from 2 to 10 of barium oxide BaO, without boron oxide B₂O₃. According to the European patent application from 1991 No. 405579 strontium oxide SrO is used as a component also in packing glass with the composition as follows (in % by weight): from 45 to 70 of silicon dioxide SiO₂, from 5 to 16 of zirconium dioxide ZrO₂, with 10 to 30 of alkaline metal oxides, over 12 oxides of divalent metals, and over 5 oxides of trivalent metals, while as alkaline metals sodium Na, potassium K or lithium Li are being regarded, and magnesium Mg, calcium Ca, strontium Sr, zinc Zn or barium Ba being classified among divalent metals and aluminium Al, iron Fe or boron B among trivalent metals. Strontium oxide SrO acts as a component in packing glass also in USSR patent from 1972 No. 330119. The complete composition is as follows (in % by weight): from 68 to 73 of silicon dioxide SiO₂, from 1,8 to 4,5 of aluminium oxide Al₂O₃, from 0,02 to 1,5 of iron trioxide Fe₂O₃, from 0,5 to 4 of magnesium oxide MgO, from 4 to 9,5 of calcium oxide CaO, from 2 to 5,2 of strontium oxide SrO, from 11 to 13 of sodium oxide Na₂O, from 0,5 to 2 of potassium oxide K₂O and from 0,2 to 2 of zirconium dioxide ZrO₂.

The closest prior art is formed by European patent No. 564802 for lead and barium free crystal glass, which composition in % by weight is as follows : silicon dioxide SiO₂ 50 to 75, sodium oxide Na₂O 2 to 15, potassium oxide K₂O 5 to 15, calcium oxide CaO 3 to 12, boron oxide B₂O₃ 0 to 10, aluminium oxide Al₂O₃ 0 to 5, lithium oxide Li₂O 0 to 5, magnesium oxide MgO 0 to 5, strontium oxide SrO 0 to 7, zinc oxide ZnO 0 to 7, titanium dioxide TiO₂ 0 to 8, zirconium dioxide ZrO₂ 0 to 5, niobium pentoxide Nb₂O₅ 0,1 to 5, tantalum pentoxide Ta₂O₅ 0 to 5, fluorides 0 to 2.

Nevertheless, these glasses belong to the fourth or third hydrolytic class largely.

The lead-free crystal glass types mentioned in the survey according to the Czech patent No.278892 which corresponds to the international patent application WO 92/19559 are designated for the man-made and machine-made utility glassware of plain type or decorated by engraving, cutting and other decorative techniques. These glass types that are well polishable mainly by chemical processes are suitable above all for cutting by diamond tools.

### Disclosure of the invention

This invention relates to the composition of crystal lead-free glass with the refractive index higher than 1,52 contains 50 to 75 % by weight of silicon dioxide SiO₂, 0,05 to 10 % by weight of aluminium oxide Al₂O₃, 0,05 to 15 % by weight of zirconium dioxide ZrO₂, 0,001 to 2,5 % by weight of hafnium dioxide HfO₂, 0,001 to 5 % by weight of titanium dioxide TiO₂, 2 to 9 % by weight of calcium oxide CaO, 0,001 to 6 % by weight of magnesium oxide MgO, 0,05 to 10 % by weight of zinc oxide ZnO, 0,1 to 10 % by weight of potassium oxide K₂O, 5 to 16 % by weight of sodium oxide Na₂O, 0,05 to 2,5 % by weight of antimony trioxide Sb₂O₃ and total content of iron expressed as iron trioxide Fe₂O₃ varies between 0,005 and 0,035 % by weight while this glass further contains 0,0001 to 1,25 % by weight of sulphates SO₄²⁻ and chlorides Cl⁻ and 0,000005 to 0,8105 % by weight of at least one component from the group including erbium oxide Er₂O₃, neodymium oxide Nd₂O₃, ceric oxide CeO₂, cobaltous oxide CoO, nickel oxide NiO, manganese oxides and selenium compounds. In any case the total of all glass components is at least 99,6 % by weight.

As impurities amounting maximum of 0,4 % by weight the compounds carried in above all by usual glass raw materials can be present such as strontium oxide SrO, lead oxide PbO, cadmium oxide CdO, cupric oxide CuO, arsenic trioxide As₂O₃, praseodymium trioxide Pr₂O₃, samarium oxide Sm₂O₃, chrome oxide Cr₂O₃, vanadic oxide V₂O₅, uranium trioxide UO₃, thorium dioxide ThO₂, fluorides, etc.

Glass refining by antimony trioxide Sb₂O₃ or if needed by antimonitans introduced usually into glass batch in common with nitrates will be more intensive at the presence of sulphates SO₄²⁻ varying between 0,0001 and 0,75 % by weight and chlorides Cl⁻ between 0,001 and 0,5 % by weight.

High light transmittance and perfect clearness is achieved at the presence at least one component from the group comprising 0,0001 to 0,2 % by weight of erbium oxide Er₂O₃, 0,0001 to 0,2 % by weight of neodymium oxide Nd₂O₃, 0,001 to 0,2 % by weight of ceric oxide CeO₂, 0,000005 to 0,0005 % by weight of cobaltous oxide CoO, 0,00001 to 0,005 X by weight of nickel oxide NiO, 0,001 to 0,200 % by weight of manganese oxide MnO₂ expressing in re-count manganese oxides and, selenium amount of 0,00001 to 0,005 % by weight, expressing in re-count selenium compounds.

Utility and technological properties particularly the meltableness and partly also the refractive index of glass, its chemical resistance and the liquidus temperature are advantageously modified by at least one oxide from the group comprising 0,05 to 6 % by weight of barium oxide BaO, 0,001 to 5 % by weight of boron oxide B₂O₃, 0,001 to 1,5 of phosphoric oxide P₂O₅ and 0,001 to 1,5 % by weight of lithium oxide Li₂O.

As further modifiers, with the respect to the refractive index, partly to the mean dispersion and to the surface tension, this glass can contain with advantage at least one oxide from the group comprising 0,05 to 5 % by weight of stannic dioxide SnO₂, 0,05 to 2 % by weight of lanthanum oxide La₂O₃, 0,05 to 10 % by weight of bismuth oxide Bi₂O₃, 0,001 to 0,1 % by weight of molybdic oxide MoO₃ and 0,001 to 0,5 % by weight of tungstic oxide WO₃.

Among dominant advantages of this glass type belong good cutting and engraving abilities, namely by diamond, carborundum, electrite, etc. tools, good polishing ability by using both chemical and mechanical processes, excellent optical properties, especially high light transmittance and perfect clearness. From the point of view concerning crystal glass types its excellent chemical resistance is also of importance and as favourable the comparable or more advantageous melting, refining, forming and cooling temperatures and also convenient crystallization properties can be regarded. But its major preference consists in the absence of hygienic and environmentally harmful lead oxide. During the melting process do not volatilize environmentally irregular lead oxides and arsenic that are used in the manufacture of lead crystal glasses. As it is completely lead-free and is designated above all for the utility glass and consequently for beverage glass and household use it involves the significant advantage that no undesired and healthy damaging lead oxide will pass over into the leaching.

### Examples of carrying out invention

This invention will be explained in more detail in the following examples of carrying out.

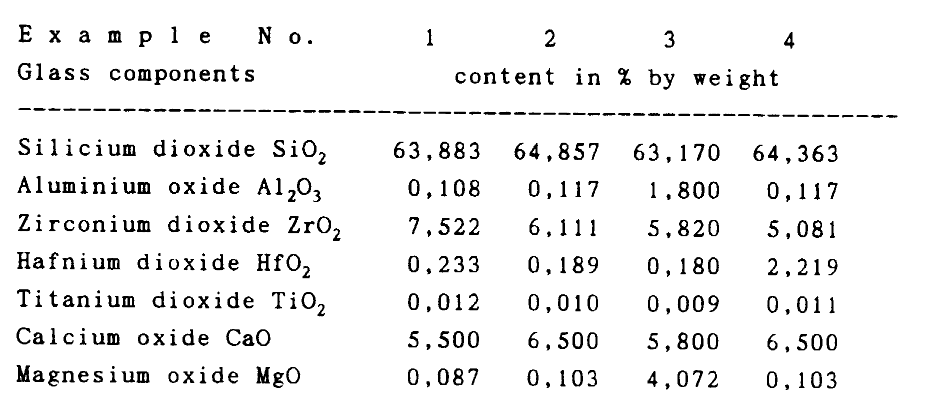

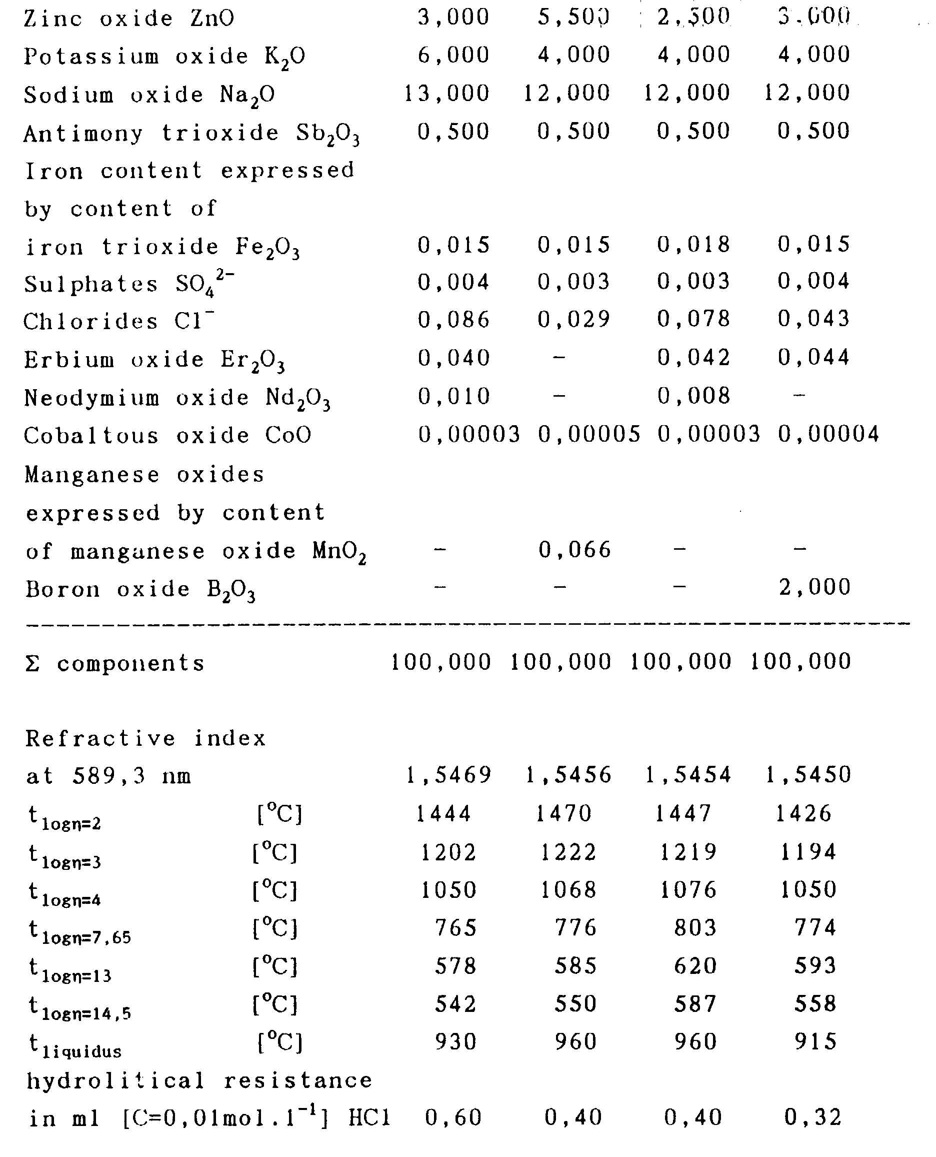

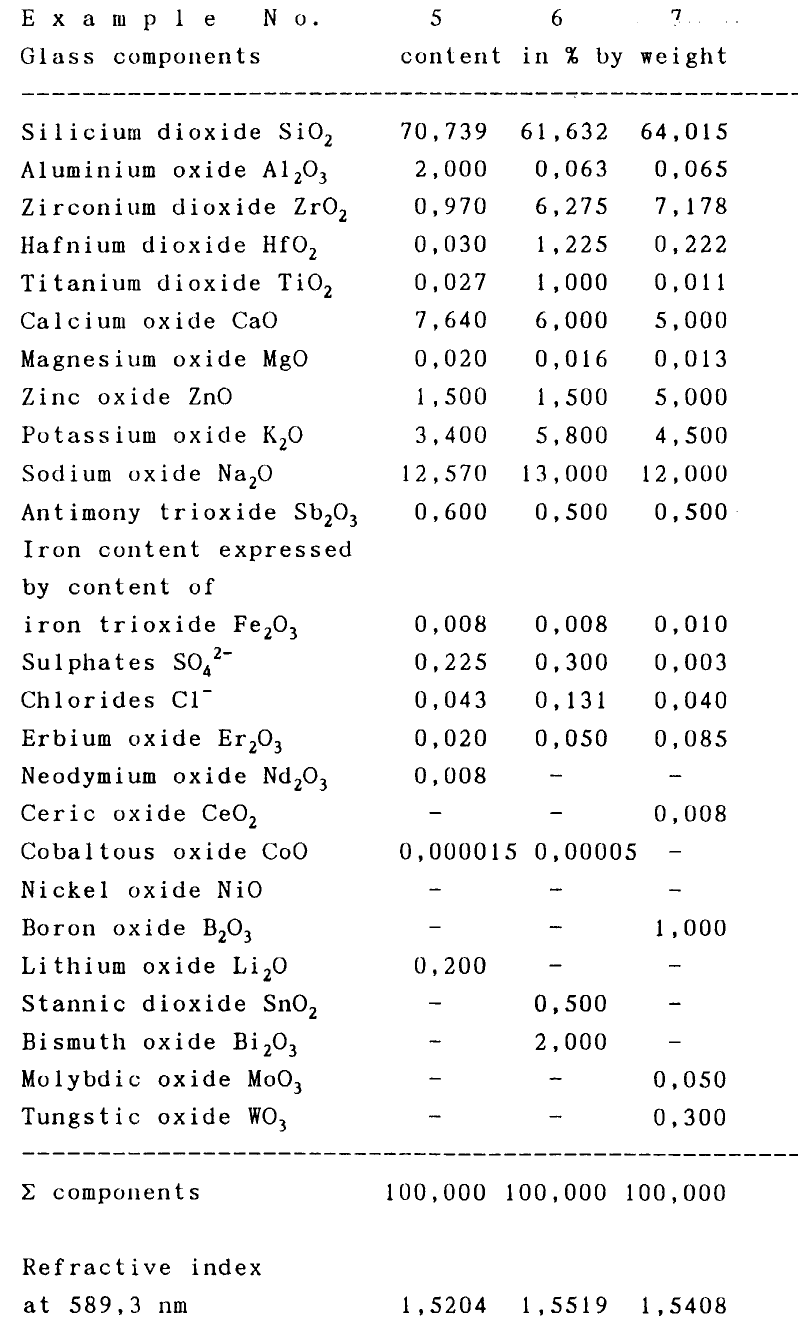

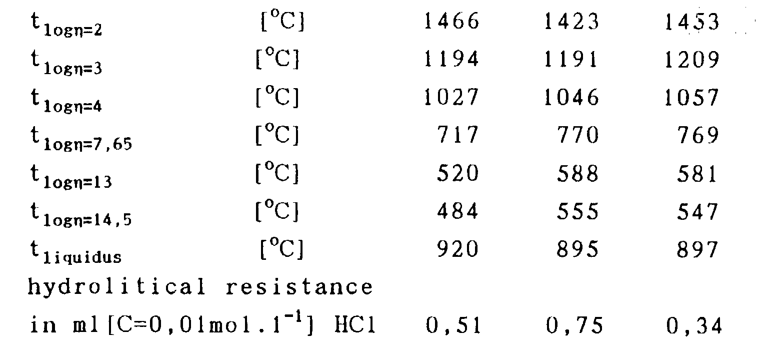

In examples carrying out corresponds t_{logη=2} to the melting temperature, t_{logη=4} to the working temperature, t_{logη=7,65} to the softening point temperature, t_{logη=13} to the upper annealing temperature and t_{logη=14,5} to the lower annealing temperature.

The values of hydrolitical resistance expressed in the consumption of 0,01 molar hydrochloric acid in mililitres show that all glasses mentioned fulfil the condition desired for classification in the third class of hydrolitical resistance. By rising the amount of zirconium dioxide ZrO₂, hafnium dioxide HfO₂ and zinc oxide ZnO in glasses mentioned the condition is given for the classification in the second class of hydrolitical resistance.

The given composition of lead-free glass types according to this invention can be also applied into basic composition of coloured glass types that are coloured by using usual procedures and known types of colouring substances and their combinations in current concentrations as well.

### Industrial applicability

The lead-free crystal glass with the refractive index higher than 1,52 according to this invention is assigned to the production of man-made and machine-made utility glass, for the products of luxurious character in plain but especially decorated designs using engraving, cutting and further decorative techniques. This type of glass is suitable for processing by diamond, carborundum, electrite, atc. tools, it is well polishable by chemical and mechanical treatment and features a high light transmittance and perfect clearness. It can be applied as initial basis for coloured glass types. This glass is hygienic unharmful concerning the content of detrimental substances in the leaching and by its brilliance can compete with the products made of lead crystal glass.

In question is the production of glass objects used in households and restaurants, e.g. small cups, tumblers, carafes, bowls and, vessels of various shapes and sizes used for decorative purposes such as vases, dishes, etc., including applied art designs and objects of art.

## Claims

1. Lead-free crystal glass with the refractive index higher than 1,52 suitable especially for production of man-made and machine-made utility glass containing silicon dioxide SiO₂, aluminium oxide Al₂O₃, zirconium dioxide ZrO₂, hafnium dioxide HfO₂,titanium dioxide TiO₂, calcium oxide CaO, magnesium oxide MgO, zinc oxide ZnO, potassium oxide K₂O, sodium oxide Na₂O, antimony trioxide Sb₂O₃, iron trioxide Fe₂O₃,sulphates, chlorides and at least one component from the group including erbium oxide Er₂O₃, neodymium oxide Nd₂O₃, ceric oxide CeO₂, cobaltous oxide CoO, nickel oxide NiO, manganese oxides and selenium compounds, characterized by its composition, with the content 50 to 75 % by weight of silicon dioxide SiO₂, 0,05 to 10 % by weight of aluminium oxide Al₂O₃, 0,05 to 15 % by weight of zirconium dioxide ZrO₂, 0,001 to 2,5 % by weight of hafnium dioxide HfO₂, 0,001 to 5 % by weight of titanium dioxide TiO₂, 2 to 9 % by weight of calcium oxide CaO, 0,001 to 6 % by weight of magnesium oxide MgO, 0,05 to 10 % by weight of zinc oxide ZnO, 0,1 to 10 % by weight of potassium oxide K₂O, 5 to 16 % by weight of sodium oxide Na₂O, 0,05 to 2,5 % by weight of antimony trioxide Sb₂O₃, the total amount of iron expressed as iron trioxide Fe₂O₃ being ranged from 0,005 to 0,035 % by weight, while this glass further contains 0,0001 to 1,25 % by weight of sulphates SO₄²⁻ and chlorides Cl⁻ and 0,000005 to 0,8105 % by weight of at least one component from the group comprising erbium oxide Er₂O₃, neodymium oxide Nd₂O₃, ceric oxide CeO₂, cobaltous oxide CoO, nickel oxide NiO, manganese oxides and selenium compounds, and which composition may contain 0,4% by weight or less of impurities present in usual raw glass materials, such as strontium oxide SrO, lead oxide PbO, cadmium oxide CdO, cupric oxide CuO, arsenic trioxide As₂O₃, praseodymium trioxide Pr₂O₃, samarium oxide Sm₂O₃, chrome oxide Cr₂O₃, vanadic oxide V₂O₅, uranium trioxide UO₃, thorium dioxide ThO₂ and fluorides.

2. Crystal lead-free glass with the refractive index higher than 1,52 according to claim 1, characterized by its composition, with the content of 0,0001 to 0,75 % by weight of sulphates SO₄²⁻ and 0,001 to 0,5 % by weight of chlorides Cl⁻.

3. Crystal lead-free glass with the refractive index higher than 1,52 according to claims 1 and 2, characterized by its composition, with the content at least of one component from the group comprising 0,0001 to 0,2 % by weight of erbium oxide Er₂O₃, 0,0001 to 0,2 % by weight of neodymium oxide Nd₂O₃, 0,001 to 0,2 % by weight of ceric oxide CeO₂, 0,000005 to 0,0005 % by weight of cobaltous oxide CoO, 0,00001 to 0,005 % by weight of nickel oxide NiO, 0,001 to 0,200 % by weight of manganese oxide MnO₂ expressing in re-count manganese oxides and 0,00001 to 0,005 % by weight of selenium expressing in re-count selenium compounds.

4. Crystal lead-free glass with the refractive index higher than 1,52 according to claims 1 to 3, characterized by its composition, with the content at least of one oxide from the group comprising 0,05 to 6 % by weight of barium oxide BaO, 0,001 to 5 % by weight of boron oxide B₂O₃, 0,001 to 1,5 % by weight of phosphoric oxide P₂O₅ and 0,001 to 1,5 % by weight of lithium oxide Li₂O.

5. Crystal lead-free glass with the refractive index higher than 1,52 according to claims 1 to 3 or according to claims 1 to 4, characterized by its composition, with the content at least one component from the group comprising 0,05 to 5 % by weight of stannic dioxide SnO₂, 0,05 to 2 % by weight of lanthanum oxide La₂O₃, 0,05 to 10 % by weight of bismuth oxide Bi₂O₃, 0,001 to 0,1 % by weight of molybdic oxide MoO₃ and 0,001 to 0,5 % by weight of tungstic oxide WO₃.

## Patentansprüche

1. Bleifreies Kristallglas mit einer Brechungszahl größer als 1,52, das insbesondere für von Hand oder mittels Maschine hergestellte Gebrauchsglaswaren geeignet ist und folgende Stoffe aufweist: Siliziumdioxyd SiO₂, Aluminiumoxyd Al₂O₃, Zirkoniumdioxyd ZrO₂, Hafniumdioxyd HfO₂, Titandioxyd TiO₂, Kalziumoxyd CaO, Magnesiumoxyd MgO, Zinkoxyd ZnO, Kaliumoxyd K₂O, Natriumoxyd Na₂O, Antimontrioxyd Sb₂O₃, Eisentrioxyd Fe₂O₃, Sulphate, Chloride und mindestens eine Komponente aus der Gruppe, die Erbiumoxyd Er₂O₃, Neodymoxyd Nd₂O₃, Zeroxyd CeO₂, Kobaltoxyd CoO, Nickeloxyd NiO, Manganoxyde und Selenverbindungen umfaßt, **gekennzeichnet durch** seine Zusammensetzung in Gewichts-% aus 50 bis 75% Siliziumdioxyd SiO₂, 0,05 bis 10% Aluminiumoxyd Al₂O₃, 0,05 bis 15% Zirkoniumdioxyd ZrO₂, 0,001 bis 2,5% Hafniumdioxyd HfO₂, 0,001 bis 5% Titandioxyd TiO₂, 2 bis 9% Kalziumoxyd CaO, 0,001 bis 6% Magnesiumoxyd MgO, 0,05 bis 10% Zinkoxyd ZnO, 0,1 bis 10% Kaliumoxyd K₂O, 5 bis 16% Natriumoxyd Na₂O, 0,05 bis 2,5% Antimontrioxyd Sb₂O₃ und einen Gesamtgehalt an Eisen in Form von 0,005 bis 0,035% Eisentrioxyd Fe₂O₃, wobei dieses Glas ferner in Gewichts-% 0,0001 bis 1,25% Sulphate SO₄²⁻ und Chloride Cl⁻ sowie 0,000005 bis 0,8105% von mindestens einer Komponente aus der Gruppe aufweist, die Erbiumoxyd Er₂O₃, Neodymoxyd Nd₂O₃, Zeroxyd CeO₂, Kobaltoxyd CoO, Nickeloxyd NiO, Maganoxyde und Selenverbindungen umfaßt, wobei die Zusammensetzung 0,4 Gewichts-% oder weniger an Verunreinigungen aufweisen kann, die üblicherweise in Rohglasmaterialien vorhanden sind, beispielsweise Strontiumoxyd SrO, Bleioxyd PbO, Kadmiumoxyd CdO, Kupferoxyd CuO, Arsentrioxyd As₂O₃, Praseodymtrioxyd Pr₂O₃, Samariumoxyd Sm₂O₃, Chromoxyd Cr₂O₃, Vanadiumoxyd V₂O₅, Urantrioxyd UO₃, Thoriumdioxyd ThO₂ und Fluoride.

2. Bleifreies Kristallglas mit einer Brechungszahl größer als 1,52 nach Anspruch 1, dadurch gekennzeichnet, daß die Zusammensetzung einen Gehalt an Sulphaten SO₄²⁻ von 0,0001 bis 0,75 Gewichts-% und an Chloriden Cl⁻ von 0,001 bis 0,5 Gewichts-% aufweist.

3. Bleifreies Kristallglas mit einer Brechungszahl größer als 1,52 nach den Ansprüchen 1 und 2, dadurch gekennzeichnet, daß die Zusammensetzung den folgenden Gehalt in Gewichts-% mindestens einer Komponente aus folgender Gruppe aufweist: 0,0001 bis 0,2% Erbiumoxyd Er₂O₃, 0,0001 bis 0,2% Neodymoxyd Nd₂O₃, 0,001 bis 0,2% Zeroxyd CeO₂, 0,000005 bis 0,0005% Kobaltoxyd CoO, 0,00001 bis 0,005% Nickeloxyd NiO, 0,001 bis 0,200% Manganoxyd MnO₂ in Form von nachgezählten Manganoxyden und 0,00001 bis 0,005% Selen in Form von nachgezählten Selenverbindungen.

4. Bleifreies Kristallglas mit einer Brechungszahl größer als 1,52 nach den Ansprüchen 1 bis 3, dadurch gekennzeichnet, daß die Zusammensetzung den folgenden Gehalt in Gewichts-% mindestens eines Oxyds aus folgender Gruppe aufweist: 0,05 bis 6% Bariumoxyd BaO, 0,001 bis 5% Boroxyd B₂O₃, 0,001 bis 1,5% Phosphoroxyd P₂O₅ und 0,001 bis 1,5% Lithiumoxyd Li₂O.

5. Bleifreies Kristallglas mit einer Brechungszahl größer als 1,52 nach den Ansprüchen 1 bis 3 oder den Ansprüchen 1 bis 4, dadurch gekennzeichnet, daß die Zusammensetzung den folgenden Gehalt in Gewichts-% mindestens einer Komponente aus folgender Gruppe aufweist: 0,05 bis 5% Zinnoxyd SnO₂, 0,05 bis 2% Lanthanoxyd La₂O₃, 0,05 bis 10% Wismutoxyd Bi₂O₃, 0,001 bis 0,1% Molybdänoxyd MoO₃ und 0,001 bis 0,5% Wolframoxyd WO₃.

## Revendications

1. Verre cristal sans plomb avec l'indice de réfraction supérieure à 1,52 convenient surtout à la production de la verrerie de table fabriquée à la main ou par les machines, le verre contient l'anhydride silicique SiO₂, l'oxyde d'aluminium Al₂O₃, l'oxyde de zirconium ZrO₂, l'oxyde de hafnium HfO₂, l'oxyde de titanium TiO₂, l'oxyde de calcium CaO, l'oxyde de magnésium MgO, l'oxyde de zinc ZnO, l'oxyde de potassium K₂O, l oxyde de sodium Na₂O, l'oxyde d'antimoine Sb₂O₃, l'oxyde ferrique Fe₂O₃, sulfates, chlorures et au moins un composant appartenant au groupe de l'oxyde d'erbium Er₂O₃, l'oxyde de neodymium Nd₂O₃, l' oxyde de cerium CeO₂, l'oxyde de cobalt CoO, l'oxyde de nickel NiO, les oxydes de manganèse et les composés 15 de sélénium, **caractérisé en ce que**, sa composition
en anhydride siliceux SiO₂ de 50 à 75 % de poids,
en oxyde d'aluminium Al₂O₃ de 0,05 à 10 % de poids,
en oxyde de zirconium ZrO₂ de 0,05 à 15 % de poids,
en oxyde d'hafnium HfO₂ de 0,001 à 2,5% de poids,
en oxyde de titanium TiO₂ de 0,001 à 5 % de poids,
en oxyde de calcium CaO de 2 à 9 % de poids,
en oxyde de magnésium MgO de 0,001 à 6 % de poids,
en oxyde de zinc ZnO de 0,05 à 10 % de poids,
en oxyde de potassium K₂O de 0,1 à 10 % de poids,
en oxyde de sodium Na₂O de 5 à 16 % de poids,
en oxyde d'antimoine Sb₂O₃ de 0,05 à 2,5 % de poids,
et la teneur totale en fer exprimée comme l'oxyde ferrique Fe₂O₃ varie de 0,005 à 0,035 % de poids,
étant donné qu'il contient aussi de 0,0001 à 1,25 % de poids de sulfates SO₄²⁻ et de chlorures Cl⁻,
et de 0,000005 à 0,8105 % de poids d'un composant au moins du groupe d'oxyde d'erbium Er₂O₃, l'oxyde de neodymium Nd₂O₃, l'oxyde de cerium CeO₂, l'oxyde de cobalt CoO, l'oxyde de nickel NiO, les oxydes de manganèse et les composés de sélénium;
la teneur des impuretés peut aller jusqu' à 0,4 de poids ou moins si on tient le compte de la composition des matières premières généralement employées en sa production, c'est-à-dire l'oxyde de strontium SrO, l'oxyde de plomb PbO, l'oxyde de cadmium CdO, l'oxyde cuivrique CuO, le trioxyde d'arsenic As₂O₃, le trioxyde de praseodymium Pr₂O₃, l'oxyde de samarium Sm₂O₃, l'oxyde chromique Cr₂O₃, le pentoxyde de vanadium V₂O₅, l'oxyde d'uranium UO₃, l'oxyde de thorium ThO₂ et fluorures.

2. Verre cristal sans plomb avec l'indice de réfraction supérieure à 1,52, conformément à la revendication 1,
**caractérisé en ce que**, sa composition en sulfates SO₄²⁻ de 0,0001 à 0,75 % de poids et en chlorures Cl⁻ de 0,001 à 0,5 % de poids.

3. Verre cristal sans plomb avec l'indice de réfraction supérieure à 1,52, conformément à la revendications 1 et 2, **caractérisé en ce que**, sa composition en un composant au moins appartenant au groupe comprenant
de 0,0001 à 0,2 % de poids de l'oxyde d'erbium Er₂O₃,
de 0,0001 à 0,2 % de poids de l'oxyde de neodymium Nd₂O₃,
de 0,001 à 0,2 % de poids de l'oxyde de cerium CeO₂,
de 0,000005 à 0,0005 % de poids de l'oxyde de cobalt CoO,
de 0,00001 à 0,005 % de poids de l'oxyde de nickel NiO,
de 0,001 à 0,2 % de poids d'oxydes de manganèse exprimés comme MnO₂ et
de 0,00001 à 0,005 % de poids des composés de sélénium exprimé comme sélénium élémentaire.

4. Verre cristal sans plomb avec l'indice de réfraction supérierure à 1,52, conformément aux revendications 1 à 3, **caractérisé en ce que,** sa composition en un oxide au moins du groupe comprenant
de 0,05 à 6 % de poids de l'oxyde de barium BaO,
de 0,001 à 5 % de poids de l'anhydride borique B₂O₃,
de 0,001 à 1,5 % de poids de l'anhydride phosphorique P₂O₅ et
de 0,001 à 1,5 % de poids de l'oxyde de lithium Li₂O.

5. Verre cristal sans plomb avec l'indice de réfraction supérieure à 1,52, conformément aux revendications 1 à 3 ou 1 à 4, **caractérisé en ce que** sa composition en un composant au moins du groupe comprenant
de 0,05 à 5 % de poids de l'oxyde stannique SnO₂,
de 0,05 à 2 % de poids de l'oxyde de lanthane La₂O₃,
de 0,05 à 10 % de poids de l'oxyde de bismuth Bi₂O₃,
de 0,001 à 0,1 % de poids de l'oxyde de molybdène MoO₃ et
de 0,001 à 0,5 % de poids du trioxyde de tungstène WO₃.
